# EUROPEAN PATENT SPECIFICATION

(11) **EP 0 487 625 B1**
(45) Date of publication and mention of the grant of the patent: **08.10.1997**
(21) Application number: 90913311.8
(22) Date of filing: 13.08.1990
(51) Int. Cl.: B29C 45/16

(54) **SEQUENTIALLY INJECTED MULTI-COMPONENT INJECTION MOLDING**
NACHEINANDER EINGESPRITZTE MEHRKOMPONENTE EINSPRITZGIESSVERFAHREN
MOULAGE PAR INJECTION A PLUSIEURS COMPOSANTS ET A INJECTION SEQUENTIELLE

(30) Priority: 14.08.1989 US 394228; 18.06.1990 US 539855
(43) Date of publication of application: 03.06.1992
(60) Divisional application: 97102377.5
(73) Proprietor: SORENSEN, Jens Ole, Cayman Islands (KY)
(72) Inventor: SORENSEN, Jens Ole, Cayman Islands (KY)
(74) Representative: Wilson, Nicholas Martin
(86) International application number: US9004566
(87) International publication number: WO9102640

(56) References cited:
- GB-A- 1 061 234
- JP-A- 5 973 930
- US-A- 4 416 602
- US-A- 4 726 758
- US-A- 4 935 184

## Description

The present invention generally pertains to a method and an apparatus for multi-cavity injection molding of plastic products and is particularly directed to a highly efficient and highly controllable method and an apparatus for core-back and shuttle stack injection molding of multi-component plastic products. Core-back injection molding makes possible the injection of a first plastic material into a mold cavity, followed by retracting a barrier means, in order to enable section of a second plastic material without separating any mold halves.

Heretofore core-back multi-cavity injection molding of multi-component plastic products was carried out by simultaneous injection of all cavities by a first plastic material and subsequently in time by simultaneous section of all cavities by a second plastic material.

Examples of prior art core-back injection molding may be seen in the following U. S. patents: 4,157,883 to Mares; 4,508,676 to Sorensen; 4,726,758 to Sekine et al. and 4,840,760 to Oishi.

The problem with such injection molding is that it is very inefficient because only one injection unit is operating at the time, and it is not very controlled because all the cavities are filled at the same time, causing slow injection speeds and balancing problems in filling the individual cavities evenly.

Another example of prior art core-back injection molding may be seen in U. S. Patent No. 4,416,602 to Neumeister. In the method described therein, a first multi-component plastic product and a second multi-component plastic product are injection molded in an injection molding apparatus defining a first adjustable mold cavity and a second adjustable mold cavity. The method includes the steps of:
(a) adjusting the first adjustable mold cavity;
(b) adjusting the second adjustable mold cavity;
(c) injecting plastic material into the first adjustable mold cavity to form a first component of the first multi-component product;
(d) injecting plastic material into the second adjustable mold cavity to form a second component of the second multi-component product which combines with a first component of the second multi-component product which was injected into the second adjustable mold cavity in step (i) of the previous cycle, to thereby cast said second multi-component product;
(e) ejecting the second multi-component product;
(f) adjusting the second adjustable mold cavity;
(g) adjusting the first adjustable mold cavity;
(h) injecting plastic material into the first adjustable mold cavity to form a second component of said first multi-component product, which combines with the first component of the first multi-component product which was injected into the first adjustable mold cavity in step (c), to thereby cast said first multi-component product;
(i) injecting plastic material into the second adjustable mold cavity to form a first component of a second multi-component product; and
(j) ejecting the first multi-component product.

The present invention provides a method of cyclic injection molding a first multi-component plastic product and a second multi-component plastic product in an injection molding apparatus defining a right adjustable mold cavity and a left adjustable mold cavity, the method comprising the steps of;
(a) adjusting the right adjustable mold cavity;
(b) adjusting the left adjustable mold cavity;
(c) injecting plastic material into the right adjustable mold cavity to form a first component of the first multi-component product;
(d) injecting plastic material into the left adjustable mold cavity to form a second component of the second multi-component product which combines with a first component of the second multi-component product which was injected into the left adjustable mold cavity in step (i) of the previous cycle, to thereby cast said second multi-component product;
(e) ejecting the second multi-component product;
(f) adjusting the left adjustable mold cavity;
(g) adjusting the right adjustable mold cavity;
(h) injecting plastic material into the right adjustable mold cavity to form a second component of said first multi-component product, which combines with the first component of the first multi-component product which was injected into the right adjustable mold cavity in step (c), to thereby cast said first multi-component product;
(i) injecting plastic material into the left adjustable mold cavity to form a first component of a second multi-component product; and
(j) ejecting the first multi-component product,
   characterised by the steps of:
(k) forming the right adjustable mold cavity between a right molding block and a center molding block by moving a first movable barring means; and
(l) forming the left adjustable mold cavity between a left molding block and the center molding block by moving a second movable barring means.

The present invention enables very efficient injection molding because both injection units may be operated at the same time, and the present invention enables very controlled injection because it is possible to inject only one half of the cavities by a specific injection unit at the same time, or even only one quarter of the cavities by a specific injection unit at the same time.

The present invention also provides an apparatus for cyclic injection molding a first multi-component plastic product and a second multi-component plastic product, said apparatus defining a right adjustable mold cavity and a left adjustable mold cavity, and said apparatus comprising means for adjusting the right adjustable mold cavity; means for adjusting the left adjustable mold cavity; a first injection unit for injecting plastic material into the right adjustable mold cavity to form a first component of the first multi-component product and for injecting plastic material into the left adjustable mold cavity to form a first component of a second multi-component product; a second injection unit for injecting plastic material into the right adjustable mold cavity subsequent to adjustment of the right adjustable mold cavity after formation of the first component of the first multi-component product, to form a second component of said first multi-component product, which combines with the first component of the first multi-component product to thereby cast said first multi-component product, and for injecting plastic material into the left adjustable mold cavity subsequent to adjustment of the left adjustable mold cavity after formation of the first component of the second multi-component product, to form a second component of the second multi-component product which combines with the first component of the second multi-component product to thereby cast said second multi-component product: and characterised by a right molding block, a center molding block and a first movable barring means for forming the right adjustable mold cavity between the right molding block and the center molding block and by a left molding block and a second movable barring means for forming the left adjustable mold cavity between the left molding block and the center molding block.

Additional features of the present invention are described in relation to the description of the preferred embodiments.

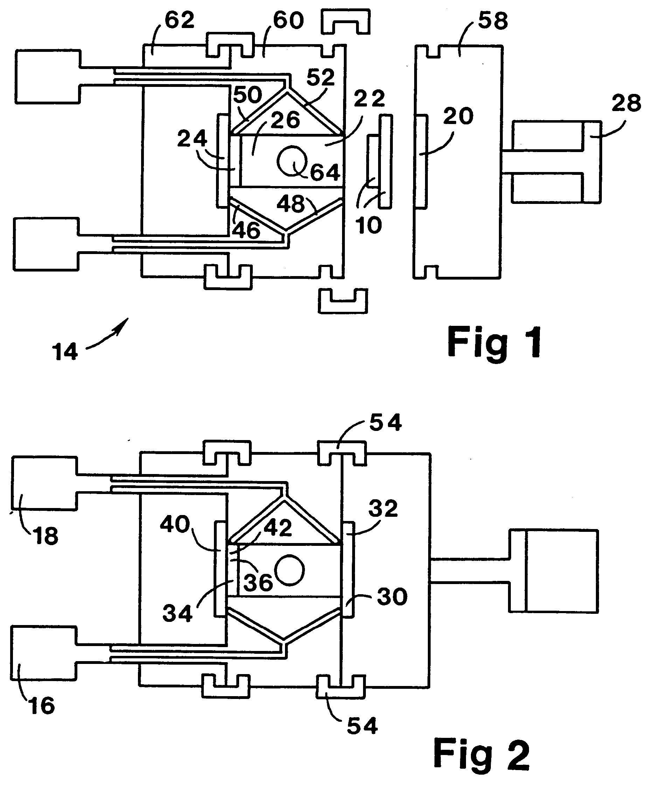

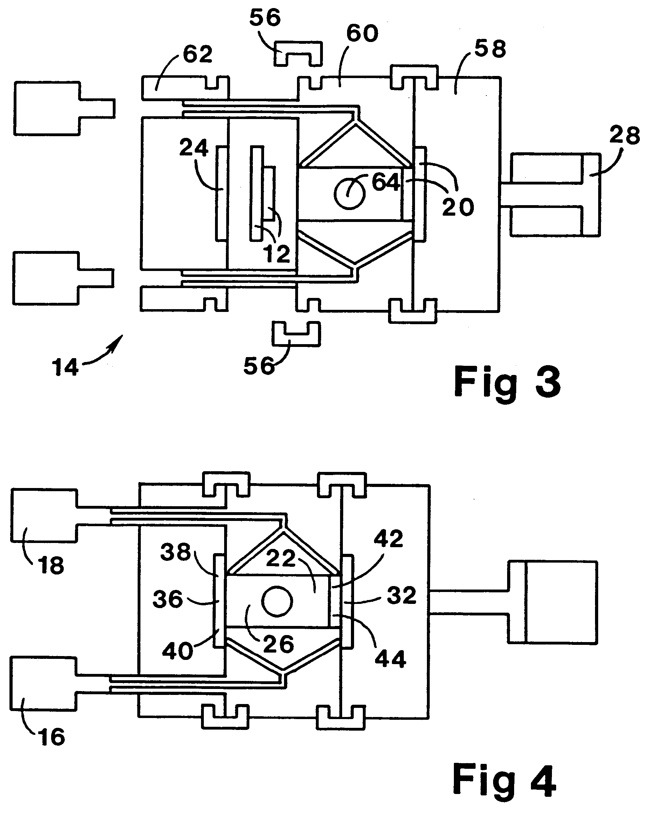

Figures 1 through 4 show within a molding cycle four chronological top sectional views of an injection molding apparatus according to the invention used to operate the method of the invention.

Referring to Figures 1 through 4, a first preferred embodiment of an apparatus 14 for cyclic injection molding a first multi-component plastic product 10 and a second multi-component plastic product 12 includes a first injection unit 16, a second injection unit 18, a right adjustable mold cavity 20 with a first movable barring means 22, a left adjustable mold cavity 24 with a second movable barring means 26, and a hydraulic piston 64 for protracting and retracting the first and second barring means 22, 26, a common clamping unit 28 to apply clamping force simultaneously on the right and left adjustable mold cavity 20, 24, and for opening and closing the right and left adjustable mold cavity 20, 24, right, center and left molding blocks 58, 60, 62 respectively for defining the right adjustable mold cavity 20, between the right and center molding blocks 58, 60 and the left adjustable mold cavity 24, between the center and left molding blocks 60, 62, right locking means 54 for locking the right molding block 58 to the center molding block 60, left locking means 56 for locking the center molding block 60 to the left molding block 62, a first left runner system 46 for leading plastic molding material from the first injection unit 16 to the left adjustable mold cavity 24, a first right runner system 48 for leading plastic molding material from the first injection unit 16 to the right adjustable mold cavity 20, a second left runner system 50 for leading plastic molding material from the second injection unit 18 to the left adjustable mold cavity 24, and a second right runner system 52 for leading plastic molding material from the second injection unit 18 to the right adjustable mold cavity 20.

Referring again to Figures 1 through 4. The operation of the first preferred embodiment is as follows:

The first moveable barrier means 22 is protracted by the hydraulic piston 64 and the second moveable barrier means 26 is retracted simultaneously by the same hydraulic piston 64 thereby adjusting the right and the left mold cavity 20, 24. In other embodiments of the invention it is possible to use separate protracting and retracting means to move the different barrier means independently and at different times.

Then the clamping unit 28 is shut by moving relatively the right and left molding blocks 58, 62 together, in order to apply clamping force simultaneously on the right and left adjustable mold cavity 20, 24. The right and center molding blocks 58, 60, are locked together by the right locking means 54. A first portion of a first plastic material 30 is injected by the first injection unit 16 into the right adjustable mold cavity 20, which has its first barring means 22 in the protracted position, to form a first component of the first multi-component product 32. Simultaneously a first portion of a second plastic material 42 is injected by the second injection unit 18 into the left adjustable mold cavity 24 which has its second barring means 26 in the retracted position, to form a second component of the second multi-component product 36 while the left adjustable mold cavity 24 encases a first component of the second multi-component product 40 which has been injected into the left adjustable mold cavity 24 in the previous cycle, whereby the first component of the second multi-component product 40 combines with said injected first portion of the second plastic material 34 to thereby cast said second multi-component product 12.

The center and left molding blocks 60, 62 are unlocked by the left locking means 56 and the clamping unit 28 is then activated in order to open the left adjustable mold cavity 24, by moving relatively the right and left molding blocks 58, 62 apart, so that the second multi-component product 12 may be ejected.

Hereafter the second moveable barrier means 26 is protracted by the hydraulic piston 64 and the first moveable barrier means 22 is retracted simultaneously by the same hydraulic piston 64 thereby adjusting the right and the left mold cavity 20, 24.

It is an important advantage of the present invention that when the left or right mold cavity is opened the clamping unit is not providing any clamping force on the mold, so that the barrier means may be moved freely without any increased friction which normally occurs whenever clamping force is applied to the mold cavities.

Then the clamping unit 28 is shut by moving relatively the right and left molding blocks 58, 62 together, in order to apply clamping force simultaneously on the right and left adjustable mold cavity 20, 24. The center and left molding blocks 60, 62 are locked together by the left locking means 56. A second portion of a first plastic material 38 is injected by the first injection unit 16 into the left adjustable mold cavity 24, which has its second barring means 26 in the protracted position, to form a first component of the second multi-component product 36 to thereby encase the first component of the second multi-component product 40 in the left mold cavity 24 for employment in the succeeding cycle. Simultaneously a second portion of a second plastic material 42 is injected by the second injection unit 18 into the right adjustable mold cavity 20 which has its first barring means 22 in the retracted position, to form a second component of the first multi-component product 44 while the right adjustable mold cavity 20 encases a first component of the first multi-component product 32 which has been injected into the right adjustable mold cavity 20 previously, whereby the first component of the first multi-component product 32 combines with said injected second portion of the second plastic material 42 to thereby cast said first multi-component product 10.

The right and center molding blocks 58, 60 are unlocked by the right locking means 54 and the clamping unit 28 is then activated in order to open the right adjustable mold cavity 20 by moving relatively the right and left molding blocks 58, 62 apart, so that the first multi-component product 10 may be ejected. The first multi-component product 10 is identical to the second multi-component product 12, but in other embodiments of the invention it is possible to mold different products in the right mold cavity 20 and the left mold cavity 24, for example a container and a lid of a multi-walled product with an oxygen barrier in one of the walls, or an A side and a B side of an audio cassette, or a front bumper and a rear bumper for an automobile.

While the above description contains many specificities, these should not be construed as limitations on the scope of the invention, but rather as an exemplification of the preferred embodiment thereof. Many other variations of the invention are possible.

For example is it not necessary that the first mold cavity and the second mold cavity are in a stacked configuration as shown in the illustrated preferred embodiment. In a second preferred embodiment of the present invention the first and second mold cavities may for example be placed side by side, the first and second mold cavity alternately opening every half molding cycle as described in the summary of the invention. For a description of a suitable locking means reference is made to for example US Patent 4,005,964 to Bishop.

Of particular interest is a third preferred embodiment of the present invention which has a first and a second mold cavity in a side by side configuration, operating like the second preferred embodiment; and a third and fourth mold cavity also in a side by side configuration and operating like the second embodiment. The first and second mold cavity being on a left side in a stacked configuration in relation to the third and fourth mold cavity being on a right side. The left side opening one quarter cycle displaced in time in relation to the right side. Fir a description of a suitable cycle reference is made to for example US patents 4,400,341 and 4,464,327 both to Sorensen.

In this third preferred embodiment both injection units inject every quarter cycle, each into a different mold cavity, and one different mold cavity opens to eject a multi-component product every quarter cycle.

In the above description, and the description following hereafter, whenever a specific mold cavity is mentioned like for example the left mold cavity or the third mold cavity, it is possible to place a number of individual mold cavities in place of such mentioned mold cavity, so that an apparatus with a very large number of mold cavities are possible within the limitations of the invention.

A fourth preferred embodiment of the present invention has a first and a second mold cavity in a stacked configuration, operating like the first preferred embodiment; and a third and fourth mold cavity also in a stacked configuration and operating like the first embodiment. The first and second mold cavity being on a left side in a stacked configuration in relation to the third and fourth mold cavity being on a right side, in this way all the four cavities are stacked on each other. The left stacked side opening one quarter cycle displaced in time in relation to the right stacked side.

In this fourth preferred embodiment both injection units inject every quarter cycle, each into a different mold cavity, and one different mold cavity opens to eject a multi-component product every quarter cycle.

In certain cases it may be advantageous to operate the apparatus herein described in a synchronous manner in relation to injection and opening of the mold cavities, but then other advantages such as molding efficiency and injection control may be lost.

The runner systems leading from the injection units to the mold cavities may be direct whereby the injection unit moves from runner orifice to runner orifice whenever a particular cavity needs to be filled or such runner systems may be bifurcated of multi-branched whereby movement of the injection unit may be reduced or eliminated.

There may be valves in the runner systems for leading plastic material to specific mold cavities and blocking access to other mold cavities. Valves may also be used to create hold pressure and when depressurizing a particular runner system or section of such runner system.

No valves have been shown in the illustrated first preferred embodiment. This is because when the first plastic is injected the moveable barring means obstruct flow into one of the mold cavities and when the second plastic is injected the firstly injected plastic obstructs flow into the other mold cavity.

Mold cavities in a stacked configuration as referred to in the present specification may be either in a stack mold, sandwich mold configuration or in a multi-platen machine configuration . A very important feature of the present invention is that it can be carried out using standard injection molding machines with a standard clamping unit. There may be any number of injection units with different colors and/or plastic materials. These injection units do not need to be aligned axially as in the first preferred embodiment, but may be aligned in any direction . The invention is very suitable for the injection molding of four color rear lights for automobiles, in which case four injection units are necessary.

In case of four colors there needs to be four runner systems leading to each cavity. In order to fill only a part of an adjustable mold cavity, the part of the cavity to be filled by plastic material of a particular color may be confined by rotating or moveable barrier means, earlier injected hardened plastic and/or exchangeable mold sections which are rotated or shuttled into their temporary positions.

In order to start up the cycles of the present invention, one way is to place or leave components from a previous cycle in the respective mold cavities. Another way is to inject a larger quantity of plastic material into the mold cavities which have missing plastic components in the first cycle.

It is also possible to operate the apparatus of the first embodiment of the invention in a synchronous manner. In such case the first and second barrier means may be protracted or retracted simultaneously and the right and left mold cavities may be shut or opened synchronously. The apparatus is then operated as follows. The first and second barrier means are protracted, then the first and second portions of the first plastic are injected simultaneously, then the first and second barrier means are retracted simultaneously, and then the first and second portions of the second material are injected simultaneously.

There may be more than two injection units used and more than three molding blocks, with one more injection unit and one more molding block, three component products may be made. With two more injection units and two more molding blocks, four component products may be made. The molding blocks may be operated in such a fashion that two stack-molds are disposed for axial movement in respect to each other. The injection units may be placed in many different constellations, vertically, horizontally, along the machine axis or perpendicular thereto, or different angles altogether. When using a standard injection molding machine for the method of the invention, the injection units will normally have to be separated from the intermediate molding block at some period of the production cycle, but it is possible to operate the invention with the injection units attached to the intermediate molding block.

If it is necessary to apply hold pressure during a period when an injection unit is detached from the intermediate molding block, it is possible to apply hold pressure to a runner system by constricting the runner system and applying alternative hold pressure by a piston means.

The opening and closing periods may be different from the preferred embodiment, it is for example possible for the left side to open two or three times every time the right side opens once. It is possible to produce a different product in the left side and the right side, as for example a container and a lid both needing two barrier materials for such properties as moisture, oxygen, carbon dioxide, solutions, and air, for products such as foods, carbonated drinks, paints and vacumated blood tubes.

The runner systems may consist of forked or unconnected sections or sections separated by valves of many types. It may be useful to include a controlled valve near or at the gate to each product, although this feature is optional. To start up the system without such valves, either double material is injected the first time or a previously produced product is inserted in half of the mold cavities.

There may be any convenient amount of general mold cavity parts which in turn is exposed to the gated mold cavity parts. If for example there are three general and two gate mold cavity parts, the extra general mold cavity part may be used as a separate station for printing or in line blow molding or the like.

It is also possible to operate the apparatus of the second embodiment of the invention in a synchronous manner. In such case all the mold cavities may be shut or opened synchronously. The apparatus is then operated as follows. The first fluid plastic material is injected into the first left and first right mold cavities simultaneously, then the positioning means are activated simultaneously, then the second fluid plastic material is injected into the second left and second right mold cavities simultaneously, and then the positioning means are activated simultaneously.

## Claims

1. A method of cyclic injection molding a first multi-component plastic product (10) and a second multi-component plastic product (12) in an injection molding apparatus defining a right adjustable mold cavity (20) and a left adjustable mold cavity (24), the method comprising the steps of:
(a) adjusting the right adjustable mold cavity (20);
(b) adjusting the left adjustable mold cavity (24);
(c) injecting plastic material into the right adjustable mold cavity (20) to form a first component of the first multi-component product (10);
(d) injecting plastic material into the left adjustable mold cavity (24) to form a second component of the second multi-component product (12) which combines with a first component of the second multi-component product (12) which was injected into the left adjustable mold cavity (24) in step (i) of the previous cycle, to thereby cast said second multi-component product (12);
(e) ejecting the second multi-component product (12);
(f) adjusting the left adjustable mold cavity (24);
(g) adjusting the right adjustable mold cavity (20);
(h) injecting plastic material into the right adjustable mold cavity (20) to form a second component of said first multi-component product (10), which combines with the first component of the first multi-component product (10) which was injected into the right adjustable mold cavity (20) in step (c), to thereby cast said first multi-component product (10);
(i) injecting plastic material into the left adjustable mold cavity (24) to form a first component of a second multi-component product (12); and
(j) ejecting the first multi-component product (10);
characterised by
(k) forming the right adjustable mold cavity (20) between a right molding block (58) and a center molding block (60) by moving a first movable barring means (22); and
(l) forming the left adjustable mold cavity (24) between a left molding block (62) and the center molding block (60) by moving a second movable barring means (26).

2. A method according to Claim 1, characterised by step (j) being performed after step (h) and before step (d) of the following cycle.

3. A method according to Claim 1 or 2, characterised by step (e) being performed after step (d) and before step (h).

4. A method according to Claim 1 or 2, wherein the injection molding apparatus includes a first injection unit (16), and a second injection unit (18), characterised in that
step (c) comprises the step of:
(m) injecting a first portion of a first plastic material by the first injection unit (16) into the right adjustable mold cavity (20);
step (d) comprises the step of:
(n) injecting a first portion of a second plastic material by the second injection unit (18) into the left adjustable mold cavity (24);
step (h) comprises the step of:
(o) injecting a second portion of the second plastic material by the second injection unit (18) into the right adjustable mold cavity (20); and
step (i) comprises the step of:
(p) injecting a second portion of the first plastic material by the first injection unit (16) into the left adjustable mold cavity (24).

5. A method according to Claim 1, 2, or 4, characterised in that
step (a) comprises the step of:
(q) protracting the first barring means (22);
step (b) comprises the step of:
(r) retracting the second barring means (26);
step (f) comprises the step of:
(s) protracting the second barring means (26); and
step (g) comprises the step of:
(t) retracting the first barring means (22).

6. A method according to Claim 1, 2, 4 or 5, wherein the injection molding apparatus includes a common clamping unit (28) for clamping the molding block (58, 60, 62), the method being characterised by further comprising the steps of:
(u) shutting the clamping unit (28) to thereby apply clamping force simultaneously on the the right adjustable mold cavity (20) and the left adjustable mold cavity (24);
(v) opening the common clamping unit (28) in order to open the left adjustable mold cavity (24) and eject the second multi-component product (12) in accordance with step (e) while keeping the right adjustable mold cavity (20) shut;
(w) shutting the clamping unit (28) to thereby apply clamping force simultaneously on the the right adjustable mold cavity (20) and the left adjustable mold cavity (24); and
(x) opening the common clamping unit (28) in order to open the right adjustable mold cavity (20) and eject the first multi-component product (10) in accordance with step (j) while keeping the left adjustable mold cavity (24) shut.

7. A method according to claim 6, wherein step (a) and step (b) take place in the period after the beginning of step (x) of the previous molding cycle and before the termination of step (u) and wherein step (f) and step (g) take place in the period after the beginning of step (v) and before the termination of step (w).

8. A method according to claim 6, wherein the injection molding apparatus includes right locking means (54) for locking the right molding block (58) to the center molding block (60) and left locking means (56) for locking the center molding block (60) to the left molding block (62), and
wherein the method subsequent to step (u) comprises the step of:
(y) locking the right and center molding blocks (58, 60) together;
wherein the method prior to step (v) comprises the step of:
(z) unlocking the center and left molding blocks (60, 62);
wherein the method subsequent to step (w) comprises the step of:
(aa) locking the center and left molding blocks (60, 62) together; and
wherein the method prior to step (x) comprises the step of:
(ab) unlocking the right and center molding blocks (58, 60).

9. A method according to claim 1, 2, 4, 5 or 6, wherein the first multi-component product (10) is essentially identical to the second multi-component product (12).

10. A method according to claim 1, 2, 4, 5 or 6, wherein step (c) and step (d) take place at approximately the same time and wherein step (h) and step (i) take place at approximately the same time.

11. A method according to claim 1, 2, 4, 5 or 6, wherein step (a) and step (b) take place at approximately the same time and wherein step (f) and step (g) take place at approximately the same time.

12. Injection molding apparatus for cyclic injection molding a first multi-component plastic product (10) and a second multi-component plastic product (12), said apparatus defining a right adjustable mold cavity (20) and a left adjustable mold cavity (24), and said apparatus comprising
means (22, 64) for adjusting the right adjustable mold cavity (20);
means (26, 64) for adjusting the left adjustable mold cavity (24);
a first injection unit (16) for injecting plastic material into the right adjustable mold cavity (20) to form a first component of the first multi-component product (10) and for injecting plastic material into the left adjustable mold cavity (24) to form a first component of a second multi-component product (12);
a second injection unit (18) for injecting plastic material into the right adjustable mold cavity (20) subsequent to adjustment of the right adjustable mold cavity after formation of the first component of the first multi-component product (10), to form a second component of said first multi-component product (10), which combines with the first component of the first multi-component product (10) to thereby cast said first multi-component product (10), and for injecting plastic material into the left adjustable mold cavity (24) subsequent to adjustment of the left adjustable mold cavity after formation of the first component of the second multi-component product (12), to form a second component of the second multi-component product (12) which combines with the first component of the second multi-component product (12) to thereby cast said second multi-component product (12); and
characterised by a right molding block (58), a center molding block (60) and a first movable barring means (22) for forming the right adjustable mold cavity (20) between the right molding block (58) and the center molding block (60) and by a left molding block (62) and a second movable barring means (26) for forming the left adjustable mold cavity (24) between the left molding block (62) and the center molding block (60).

13. Injection molding apparatus according to Claim 12, characterised by means for causing the first multi-component product (10) to be ejected after said injection of plastic material into the left adjustable mold cavity (24) to form the first component of the second multi-component product (12) and before said injection of plastic material into the right adjustable mold cavity (20) during the following cycle.

14. Injection molding apparatus according to Claim 12 or 13, characterised by means for causing the second multi-component product (12) to be ejected after said injection of plastic material into the right adjustable mold cavity (20) to form the first component of the first multi-component product (10) and before said injection of plastic material into the left adjustable mold cavity (24) during the following cycle.

15. Injection molding apparatus according to Claim 12 or 13, wherein the first injection unit (16) is adapted for injecting a first portion of a first plastic material to form the first component of the first multi-component product (10) and for injecting a second portion of the first plastic material to form the first component of the second multi-component product (12), and the second injection unit (18) is adapted for injecting a first portion of a second plastic material to form the second component of the first multi-component product (10) and for injecting a second portion of the second plastic material to form the second component of the second multi-component product (12).

16. Injection molding apparatus according to Claim 12, 13, or 15, characterised by comprising
means (64) for protracting the first barring means (22) to adjust the right adjustable mold cavity (20) to form the first component of the first multi-component product (10);
means (64) for protracting the second barring means (26) to adjust the left adjustable mold cavity (24) to form the first component of the second multi-component product (12);
means (64) for retracting the first barring means (22) to adjust the right adjustable mold cavity (20) to form the second component of the first multi-component product (10); and
means (64) for retracting the second barring means (26) to adjust the left adjustable mold cavity (24) to form the second component of the second multi-component product (12).

17. Injection molding apparatus according to Claim 12, 13, 15 or 16, characterised by further comprising
a common clamping unit (28) for clamping the molding blocks (58, 60, 62);
means for shutting the clamping unit (28) to thereby apply clamping force simultaneously on the the right adjustable mold cavity (20) and the left adjustable mold cavity (24);
means for opening the common clamping unit (28) in order to open the left adjustable mold cavity (24) and sect the second multi-component product (12) while keeping the right adjustable mold cavity (20) shut; and
means for opening the common clamping unit (28) in order to open the right adjustable mold cavity (20) and eject the first multi-component product (10) while keeping the left adjustable mold (24) cavity shut.

18. Injection molding apparatus according to Claim 17, characterised by
the means (22, 64) for adjusting the right adjustable mold cavity (20) being adapted for causing the right adjustable mold cavity (20) to be adjusted to form the first component of the first multi-component product (10) after the common clamping unit (28) is opened to open the right adjustable mold cavity (20) and eject the first multicomponent product (10) and before the common clamping unit (28) is shut to apply clamping force simultaneously on the right adjustable mold cavity (20) and the left adjustable mold cavity (24);
the means (26, 64) for adjusting the left adjustable mold cavity (24) being adapted for causing the left adjustable mold cavity (24) to be adjusted to form the second component of the second multi-component product (12) after the common clamping unit (28) is opened to open the right adjustable mold cavity (20) and eject the first multicomponent product (10) and before the common clamping unit (28) is shut to apply clamping force simultaneously on the right adjustable mold cavity (20) and the left adjustable mold cavity (24); and
the means (22, 64) for adjusting the right adjustable mold cavity (20) being adapted for causing the right adjustable mold cavity (20) to be adjusted to form the second component of the first multi-component product (10) after the common clamping unit (28) is opened to open the left adjustable mold cavity (24) and eject the second multicomponent product (12) and before the common clamping unit (28) is shut to apply clamping force simultaneously on the right adjustable mold cavity (20) and the left adjustable mold cavity (24); and
the means (26, 64) for adjusting the left adjustable mold cavity (24) being adapted for causing the left adjustable mold cavity (24) to be adjusted to form the first component of the second multi-component product (12) after the common clamping unit (28) is opened to open the left adjustable mold cavity (24) and eject the second multicomponent product (12) and before the common clamping unit (28) is shut to apply clamping force simultaneously on the right adjustable mold cavity (20) and the left adjustable mold cavity (24).

19. Injection molding apparatus according to Claim 17, characterised by further comprising
right locking means (54) for locking the right molding block (58) to the center molding block (60); and
left locking means (56) for locking the center molding block (60) to the left molding block (62),
wherein the apparatus is adapted for causing the right locking means (54) to lock the right and center molding blocks (58, 60) together and for causing the left locking means (56) to lock the left and center molding blocks (62, 60) together subsequent to the common clamping unit (28) being shut to apply clamping force simultaneously on the the right adjustable mold cavity (20) and the left adjustable mold cavity (24);
wherein the apparatus is adapted for causing the right locking means (54) to unlock the right and center molding blocks (58, 60) prior to the common clamping unit (28) being opened to open the right adjustable mold cavity (20); and
wherein the apparatus is adapted for causing the left locking means (56) to unlock the left and center molding blocks (62, 60) prior to the common clamping unit (28) being opened to open the left adjustable mold cavity (24).

20. Injection molding apparatus according to Claim 12, 13, 15, 16 or 17, wherein the first multi-component product (10) is essentially identical to the second multi-component product (12).

21. Injection molding apparatus according to Claim 12, 13, 15, 16 or 17 characterised by the apparatus being adapted for causing the first injection unit (16) to inject plastic material into the right adjustable mold cavity (20) to form the first component of the first multi-component product (10) at approximately the same time as the second injection (18) injects plastic material into the left adjustable mold cavity (24) to form the second component of the second multi-component product (12), and for causing the first injection unit (16) to inject plastic material into the left adjustable mold cavity (24) to form the first component of the second multi-component product (12) at approximately the same time as the second injection (18) injects plastic material into the right adjustable mold cavity (20) to form the second component of the first multi-component product (10).

22. Injection molding apparatus according to Claim 12, 13, 15, 16 or 17 characterised by the apparatus being adapted for causing the the means (22, 64) for adjusting the right adjustable mold cavity (20) to adjust the right adjustable mold cavity (20) to form the first component of the first multi-component product (10) at approximately the same time as the means (26, 64) for adjusting the left adjustable mold cavity (24) adjust the left adjustable mold cavity (24) to form the second component of the second multi-component product (12), and for causing the the means (22, 64) for adjusting the right adjustable mold cavity (20) to adjust the right adjustable mold cavity (20) to form the second component of the first multi-component product (10) at approximately the same time as the means (26, 64) for adjusting the left adjustable mold cavity (24) adjust the left adjustable mold cavity (24) to form the first component of the second multi-component product (12).

## Patentansprüche

1. Verfahren zum zyklischen Spritzgießen eines ersten Mehrkomponentenkunststoffprodukts (10) und eines zweiten Mehrkomponentenkunststoffprodukts (12) in einer Spritzgießvorrichtung, die einen rechten einstellbaren Formhohlraum (20) und einen linken einstellbaren Formhohlraum (24) bildet, wobei zu dem Verfahren folgende Verfahrensschritte gehören:
(a) Einstellen des rechten einstellbaren Formhohlraums (20);
(b) Einstellen des linken einstellbaren Formhohlraums (24);
(c) Spritzen von Kunststoffmaterial in den rechten einstellbaren Formhohlraum (20) zur Bildung einer ersten Komponente des ersten Mehrkomponentenprodukts (10);
(d) Spritzen von Kunststoffmaterial in den linken einstellbaren Formhohlraum (24) zur Bildung einer zweiten Komponente des zweiten Mehrkomponentenprodukts (12), welche sich mit einer ersten Komponente des zweiten Mehrkomponentenprodukts (12) vereint, welches in den linken einstellbaren Formhohlraum (24) im Schritt (i) des vorhergehenden Zyklus eingespritzt war, um dadurch das zweite Mehrkomponentenprodukt (12) zu gießen;
(e) Ausstoßen des zweiten Mehrkomponentenprodukts (12);
(f) Einstellen des linken einstellbaren Formhohlraums (24);
(g) Einstellen des rechten einstellbaren Formhohlraums (20);
(h) Spritzen von Kunststoffmaterial in den rechten einstellbaren Formhohlraum (20) zur Bildung einer zweiten Komponente des ersten Mehrkomponentenprodukts (10), die sich mit der ersten Komponente des ersten Mehrkomponentenprodukts (10) vereinigt, welche in den rechten einstellbaren Formhohlraum (20) im Schritt (c) eingespritzt war, um dadurch das erste Mehrkomponentenprodukt (10) zu gießen;
(i) Spritzen von Konststoffmaterial in den linken einstellbaren Formhohlraum (24) zur Bildung einer ersten Komponente eines zweiten Mehrkomponentenprodukts (12); und
(j) Ausstoßen des ersten Mehrkomponentenprodukts (10);
gekennzeichnet durch
(k) Bilden des rechten einstellbaren Formhohlraums (20) zwischen einem rechten Formblock (58)und einem mittleren Formblock (60) durch Bewegen einer ersten bewegbaren Sperreinrichtung (22); und
(l) Bilden des rechten einstellbaren Formhohlraums (24) zwischen einem linken Formblock (62) und dem mittleren Formblock (60) durch Bewegen einer zweiten bewegbaren Sperreinrichtung (26).

2. Verfahren nach Anspruch 1,
dadurch gekennzeichnet,
daß der Schritt (j) nach dem Schritt (h) und vor dem Schritt (d) des folgenden Zyklus durchgeführt wird.

3. Verfahren nach Anspruch 1 oder 2,
dadurch gekennzeichnet,
daß der Schritt (e) nach dem Schritt (d) und vor dem Schritt (h) durchgeführt wird.

4. Verfahren nach Anspruch 1 oder 2, bei dem die Spritzgießvorrichtung eine erste Einspritzeinheit (16) und eine zweite Einspritzeinheit (18) aufweist,
dadurch gekennzeichnet,
daß zu dem Schritt (c) der folgende Verfahrensschritt gehört:
(m) Einspritzen eines ersten Abschnitts eines ersten Kunststoffmaterials durch die erste Einspritzeinheit (16) in den rechten einstellbaren Formhohlraum (20);
daß zu dem Schritt (d) der folgende Verfahrensschritt gehört:
(n) Einspritzen eines ersten Abschnitts eines zweiten Kunststoffmaterials durch die zweite Einspritzeinheit (18) in den linken einstellbaren Formhohlraum (24);
daß zu dem Schritt (h) der folgende Verfahrensschritt gehört:
(o) Einspritzen eines zweiten Abschnitts des zweiten Kunststoffmaterials durch die zweite Einspritzeinheit (18) in den rechten einstellbaren Formhohlraum (20); und
daß zu dem Schritt (i) der folgende Verfahrensschritt gehört:
(p) Einspritzen eines zweiten Abschnitts des ersten Kunststoffmaterials durch die erste Einspritzeinheit (16) in den linken einstellbaren Formhohlraum (24).

5. Verfahren nach Anspruch 1, 2 oder 4,
dadurch gekennzeichnet,
daß zu dem Schritt (a) der Verfahrensschritt gehört:
(q) Hinausschieben der ersten Sperreinrichtung (22);
daß zu dem Schritt (b) der Verfahrensschritt gehört:
(r) Zurückziehen der zweiten Sperreinrichtung (26);
daß zu dem Schritt (f) der Verfahrensschritt gehört:
(s) Hinausschieben der zweiten Sperreinrichtung (26); und
daß zu dem Schritt (g) der Verfahrensschritt gehört:
(t) Zurückziehen der ersten Sperreinrichtung (22).

6. Verfahren nach Anspruch 1, 2, 4 oder 5, bei dem zu der Spritzgießvorrichtung eine gemeinsame Spanneinheit (28) zum Spannen der Formblöcke (58, 60, 62) gehört, wobei das Verfahren weiterhin durch folgende Verfahrensschritte gekennzeichnet ist:
(u) Schließen der Spanneinheit (28) zur Aufbringung einer Spannkraft gleichzeitig auf den rechten einstellbaren Formhohlraum (20) und den linken einstellbaren Formhohlraum (24);
(v) Öffnen der gemeinsamen Spanneinheit (28) zum Öffnen des linken einstellbaren Formhohlraums (24) und Ausstoßen des zweiten Mehrkomponentenprodukts (12) gemäß Schritt (e), während der rechte einstellbare Formhohlraum (20) geschlossen gehalten wird;
(w) Schließen der Spannereinheit (28), um dadurch eine Spannkraft gleichzeitig auf den rechten einstellbaren Formhohlraum (20) und den linken einstellbaren Formhohlraum (24) aufzubringen; und
(x) Öffnen der gemeinsamen Spanneinheit (28) zum Öffnen des rechten einstellbaren Formhohlraums (20) und Ausstoßen des ersten Mehrkomponentenprodukts (10) gemäß Schritt (j), während der linke einstellbare Formhohlraum (24) geschlossen gehalten wird.

7. Verfahren nach Anspruch 6, bei dem der Schritt (a) und der Schritt (b) in der Phase nach dem Beginn des Schritts (x) des vorhergehenden Formzyklus und vor Beendigung des Schritts (u) stattfindet und bei dem Schritt (f) und der Schritt (g) in der Phase nach dem Beginn des Schritts (v) und vor dem Ende des Schritts (w) stattfindet.

8. Verfahren nach Anspruch 6, bei dem zu der Spritzgießvorrichtung eine rechte Blockiereinrichtung (54) zum Verriegeln des rechten Formblocks (58) mit dem mittleren Formblock (60) sowie eine linke Blockiereinrichtung (56) zum Verriegeln des mittleren Formblocks (60) mit dem linken Formblock (62) gehören, und
wobei das Verfahren auf den Schritt (u) folgenden Verfahrensschritt aufweist:
(y) Verriegeln des rechten und mittleren Formblocks (58, 60) miteinander;
wobei das Verfahren vor dem Schritt (v) folgenden Verfahrensschritt aufweist:
(z) Entriegeln des mittleren und linken Formblocks (60, 62);
wobei das Verfahren nach dem Schritt (w) folgenden Verfahrensschritt aufweist:
(aa) Verriegeln des mittleren und linken Formblocks (60, 62) miteinander; und
wobei das Verfahren vor dem Schritt (x) folgenden Verfahrensschritt aufweist:
(ab) Entriegeln des rechten und mittleren Formblocks (58, 60).

9. Verfahren nach Anspruch 1, 2, 4, 5, oder 6, bei dem das erste Mehrkomponentenprodukt (10) im wesentlichen identisch mit dem zweiten Mehrkomponentenprodukt (12) ist.

10. Verfahren nach Anspruch 1, 2, 4, 5 oder 6, bei dem der Schritt (c) und der Schritt (d) annähernd zur selben Zeit stattfinden und bei dem der Schritt (h) und der Schritt (i) annähernd zur selben Zeit stattfinden.

11. Verfahren nach Anspruch 1, 2, 4, 5 oder 6, bei dem der Schritt (a) und der Schritt (b) annähernd zur selben Zeit stattfinden und bei dem der Schritt (f) und der Schritt (g) annähernd zur selben Zeit stattfinden.

12. Spritzgießvorrichtung für ein zyklisches Spritzgießen eines ersten Mehrkomponentenkunststoffprodukts (10) und eines zweiten Mehrkomponentenkunststoffprodukts (12), wobei die Vorrichtung einen rechten einstellbaren Formhohlraum (20) und einen linken einstellbaren Formhohlraum (24) bildet, und wobei zu der Vorrichtung gehören:
eine Einrichtung (22, 64) zur Einstellung des rechten einstellbaren Formhohlraums (20);
eine Einrichtung (26, 64) zur Einstellung des linken einstellbaren Formhohlraums (24);
eine erste Einspritzeinheit (16) zum Einspritzen von Kunststoffmaterial in den rechten einstellbaren Formhohlraum (20) zur Bildung einer ersten Komponente des ersten Mehrkomponentenprodukts (10) und zum Einspritzen von Kunststoffmaterial in den linken einstellbaren Formhohlraum (24) zur Bildung einer ersten Komponente eines zweiten Mehrkomponentenprodukts (12);
eine zweite Einspritzeinheit (18) zum Einspritzen von Kunststoffmaterial in den rechten einstellbaren Formhohlraum (20) unmittelbar folgend auf die Einstellung des rechten einstellbaren Formhohlraums nach Bildung der ersten Komponente des ersten Mehrkomponentenprodukts (10) zur Bildung einer zweiten Komponente des ersten Mehrkomponentenprodukts (10), die sich mit der ersten Komponente des ersten Mehrkomponentenprodukts (10) vereinigt, um dadurch das erste Mehrkomponentenprodukt (10) zu gießen, und zum Einspritzen von Kunststoffmaterial in den linken einstellbaren Formhohlraum (24) anschließend an das Einstellen des linken einstellbaren Formhohlraums nach Bildung der ersten Komponente des zweiten Mehrkomponentenprodukts (12), um eine zweite Komponente des zweiten Mehrkomponentenprodukts (12) zu formen, die sich mit der ersten Komponente des zweiten Mehrkomponentenprodukts (12) vereinigt, um dadurch das zweite Mehrkomponentenprodukt (12) zu gießen; und
gekennzeichnet durch einen rechten Formblock (58), einen mittleren Formblock (60) und eine erste bewegbare Sperreinrichtung (22) zur Bildung des rechten einstellbaren Formhohlraums (20) zwischen dem rechten Formblock (58) und dem mittleren Formblock (60), und durch einen linken Formblock (62) und eine zweite bewegbare Sperreinrichtung (26) zur Bildung des linken einstellbaren Formhohlraums (24) zwischen dem linken Formblock (62) und dem mittleren Formblock (60).

13. Spritzgießvorrichtung nach Anspruch 12, gekennzeichnet durch eine Einrichtung zur Veranlassung des Ausstoßens des ersten Mehrkomponentenprodukts (10) nach dem Einspritzen von Kunststoffmaterial in den linken einstellbaren Formhohlraum (24) zur Bildung der ersten Komponente des zweiten Mehrkomponentenprodukts (12) und vor dem Einspritzen von Kunststoffmaterial in den rechten einstellbaren Formhohlraum (20) während des folgenden Zyklus.

14. Spritzgießvorrichtung nach Anspruch 12 oder 13, gekennzeichnet durch eine Einrichtung zur Veranlassung des Ausstoßens des zweiten Mehrkomponentenprodukts (12) nach Einspritzen von Kunststoffmaterial in den rechten einstellbaren Formhohlraum (20) zur Bildung in der ersten Komponente des ersten Mehrkomponentenprodukts (10) und vor dem Einspritzen von Kunststoffmaterial in den linken einstellbaren Formhohlraum (24) während des folgenden Zyklus.

15. Spritzgießvorrichtung nach Anspruch 12 oder 13, bei der die erste Einspritzeinheit (16) zum Einspritzen eines ersten Abschnitts eines ersten Kunststoffmaterials zur Bildung der ersten Komponente des ersten Mehrkomponentenprodukts (10) und zum Einspritzen eines zweiten Abschnitts des ersten Kunststoffmaterials zur Bildung der ersten Komponente des zweiten Mehrkomponentenprodukts (12) vorgesehen ist, und bei der die zweite Einspritzeinheit (18) zum Einspritzen eines ersten Abschnitts eines zweiten Kunststoffmaterials zur Bildung der zweiten Komponente des ersten Mehrkomponentenprodukts (10) und zum Einspritzen eines zweiten Abschnitts des zweiten Kunststoffmaterials zur Bildung der zweiten Komponente des zweiten Mehrkomponentenprodukts (12) vorgesehen ist.

16. Spritzgießvorrichtung nach Anspruch 12, 13 oder 15, gekennzeichnet durch
eine Einrichtung (64) zum Vorschieben der ersten Sperreinrichtung (22) zur Einstellung des rechten einstellbaren Formhohlraums (20) zum Formen der ersten Komponente des ersten Mehrkomponentenprodukts (10);
eine Einrichtung (64) zum Hinausschieben der zweiten Sperreinrichtung (26) zur Einstellung des linken einstellbaren Formhohlraums (24) zum Formen der ersten Komponente des zweiten Mehrkomponentenprodukts (12);
eine Einrichtung (64) zum Zurückziehen der ersten Sperreinrichtung (22) zwecks Einstellung des rechten einstellbaren Formhohlraums (20) zum Formen der zweiten Komponente des ersten Mehrkomponentenprodukts (10); und
eine Einrichtung (64) zum Zurückziehen der zweiten Sperreinrichtung (26) zwecks Einstellung des linken einstellbaren Formhohlraums (24) zum Formen der zweiten Komponente des zweiten Mehrkomponentenprodukts (12).

17. Spritzgießvorrichtung nach Anspruch 12, 13, 15 oder 16, gekennzeichnet durch
eine gemeinsame Spanneinheit (28) zum Spannen der Formblöcke (58, 60, 62);
eine Einrichtung zum Schließen der Spanneinheit (28), durch die gleichzeitige Spannkraft auf den rechten einstellbaren Formhohlraum (20) und den linken einstellbaren Formhohlraum (24) aufbringbar ist;
eine Einrichtung zum Öffnen der gemeinsamen Spanneinheit (28) zum Öffnen des linken einstellbaren Formhohlraums (24) und Ausstoßen des zweiten Mehrkomponentenprodukts (12) unter Beibehaltung des Schließens des rechten einstellbaren Formhohlraums (20); und
eine Einrichtung zum Öffnen der gemeinsamen Spanneinheit (28) für das Öffnen des rechten einstellbaren Formhohlraums (20) und Ausstoßen des ersten Mehrkomponentenprodukts (10) unter Beibehaltung des Schließens des linken einstellbaren Formhohlraums (24).

18. Spritzgießvorrichtung nach Anspruch 17,
dadurch gekennzeichnet,
daß die Einrichtung (22, 64) zum Einstellen des rechten einstellbaren Formhohlraums (20) so ausgebildet ist, daß durch sie der rechte einstellbare Formhohlraum (20) zur Bildung der ersten Komponente des ersten Mehrkomponentenprodukts (10) nach dem Öffnen der gemeinsamen Spanneinheit (28) zum Öffnen des rechten einstellbaren Formhohlraums (20) zum Ausstoßen des ersten Mehrkomponentenprodukts (10) und vor dem Schließen der gemeinsamen Spanneinheit (28) zum Aufbringen einer gleichzeitigen Spannkraft auf den rechten einstellbaren Formhohlraum (20) und den linken einstellbaren Formhohlraum (24) einstellbar ist;
daß die Einrichtung (26, 64) zur Einstellung des linken einstellbaren Formhohlraums (24) derart ausgebildet ist, daß durch sie der linke einstellbare Formhohlraum (24) zur Bildung der zweiten Komponente des zweiten Mehrkomponentenprodukts (12) nach dem Öffnen der gemeinsamen Spanneinheit (28) zum Öffnen des rechten einstellbaren Formhohlraums (20) und zum Ausstoßen des ersten Mehrkomponentenprodukts (10) und vor dem Schließen der gemeinsamen Spanneinheit (28) zum Aufbringen einer gleichzeitigen Spannkraft auf den rechten einstellbaren Formhohlraum (20) und den linken einstellbaren Formhohlraum (24) einstellbar ist; und
daß die Einrichtung (22, 64) zum Einstellen des rechten einstellbaren Formhohlraums (20) so ausgebildet ist, daß durch diese der rechte einstellbare Formhohlraum (20) zur Bildung der zweiten Komponente des ersten Mehrkomponentenprodukts (10) nach dem Öffnen der gemeinsamen Spanneinheit (28) zum Öffnen des linken einstellbaren Formhohlraums (24) und Ausstoßen des zweiten Mehrkomponentenprodukts (12) und vor dem Schließen der gemeinsamen Spanneinheit (28) zur gleichzeitigen Spannkraftbeaufschlagung auf den rechten einstellbaren Formhohlraum (20) und den linken einstellbaren Formhohlraum (24) einstellbar ist; und
daß die Einrichtung (26, 64) zur Einstellung des linken einstellbaren Formhohlraums (24) derart ausgelegt ist, daß durch sie der linke einstellbare Formhohlraum (24) zum Formen der ersten Komponente des zweiten Mehrkomponentenprodukts (12) nach dem Öffnen der gemeinsamen Spanneinheit (28) zum Öffnen des linken einstellbaren Formhohlraums (24) und Ausstoßens des zweiten Mehrkomponentenprodukts (12) und vor dem Schließen der gemeinsamen Spanneinheit (28) zum gleichzeitigen Spannkraftbeaufschlagen des rechten einstellbaren Formhohlraums (20) und des linken einstellbaren Formhohlraums (24) einstellbar ist.

19. Spritzgießvorrichtung nach Anspruch 17, weiterhin gekennzeichnet durch
eine rechte Arretierungseinrichtung (54) zum Verriegeln des rechten Formblocks (58) mit dem mittleren Formblock (60); und
eine linke Arretiereinrichtung (56) zum Verriegeln des mittleren Formblocks (60) mit dem linken Formblock (62),
wobei die Vorrichtung so ausgelegt ist, daß durch sie der rechte Blockiermechanismus (54) zum gemeinsamen Verriegeln des rechten und mittleren Formblocks (58, 60) und die linke Blockiereinrichtung (56) zum gemeinsamen Verriegeln des linken und mittleren Formblocks (62, 60) anschließend an das Schließen der gemeinsamen Spanneinheit (28) zum Aufbringen einer gleichzeitigen Spannkraft auf den rechten einstellbaren Formhohlraum (20) und den linken einstellbaren Formhohlraum (24) veranlaßbar ist;
wobei durch die Vorrichtung die rechte Blockiereinrichtung (54) zum Entriegeln des rechten und des mittleren Formblocks (58, 60) vor dem Öffnen der gemeinsamen Spanneinheit (28) zum Öffnen des rechten einstellbaren Formhohlraums (20) veranlaßbar ist; und
wobei durch die Vorrichtung die linke Blockiereinrichtung (56) zum Entriegeln des linken und mittleren Formblocks (62, 60) dem Öffnen der gemeinsamen Spanneinheit (28) zum Öffnen des linken einstellbaren Formhohlraums (24) entriegelbar ist.

20. Spritzgießvorrichtung nach Anspruch 12, 13, 15, 16 oder 17, bei der das erste Mehrkomponentenprodukt (10) im wesentlichen identisch zu dem zweiten Mehrkomponentenprodukt (12) ist.

21. Spritzgießvorrichtung nach Anspruch 12, 13, 15, 16 oder 17,
dadurch gekennzeichnet,
daß die Vorrichtung so ausgestaltet ist, daß durch sie die erste Einspritzeinheit (16) zum Einspritzen von Kunststoffmaterial in den rechten einstellbaren Formhohlraum (20) zum Formen der ersten Komponente des ersten Mehrkomponentenprodukts (10) annähernd zur selben Zeit veranlaßbar ist, wie die zweite Einspritzeinheit (18) Kunststoffmaterial in den linken einstellbaren Formhohlraum (24) zum Formen der zweiten Komponente des zweiten Mehrkomponentenprodukts (12) einspritzt, und durch die die erste Einspritzeinheit (16) veranlaßbar ist, Kunststoffmaterial in den linken einstellbaren Formhohlraum (24) zum Formen der ersten Komponente des zweiten Mehrkomponentenprodukts (12) annähernd zur selben Zeit veranlaßbar ist, wie die zweite Einspritzeinheit (18) Kunststoffmaterial in den rechten einstellbaren Formhohlraum (20) zur Bildung der zweiten Komponente des ersten Mehrkomponentenprodukts (10) einspritzt.

22. Spritzgießvorrichtung nach Anspruch 12, 13, 15, 16 oder 17,
dadurch gekennzeichnet,
daß die Vorrichtung so ausgebildet ist, daß durch sie die Einrichtung (22, 64) zum Einstellen des rechten einstellbaren Formhohlraums (20) zur Einstellung des rechten einstellbaren Formhohlraums (20) zwecks Formens der ersten Komponente des ersten Mehrkomponentenprodukts (10) annähernd zur selben Zeit veranlaßbar ist, wie die Einrichtung (26, 64) zur Einstellung des linken einstellbaren Formhohlraums (24) den linken einstellbaren Formhohlraum (24) zur Bildung der zweiten Komponente des zweiten Mehrkomponentenprodukts (12) einstellt, und durch sie die Einrichtung (22, 64) für das Einstellen des rechten einstellbaren Formhohlraums (20) zum Einstellen des rechten einstellbaren Formhohlraums (20) zur Bildung der zweiten Komponente des ersten Mehrkomponentenprodukts (10) zur annähernd selben Zeit veranlaßbar ist, wie die Einrichtung (26, 64) für die Einstellung des linken einstellbaren Formhohlraums (24) den linken einstellbaren Formhohlraum (24) zur Bildung der ersten Komponente des zweiten Mehrkomponentenprodukts (12) einstellt.

## Revendications

1. Procédé de moulage cyclique par injection d'un premier produit en matière plastique à plusieurs composants (10) et d'un second produit en matière plastique à plusieurs composants (12) dans un appareil de moulage par injection définissant une cavité de moule droit ajustable (20) et une cavité de moule gauche ajustable (24), le procédé comprenant les opérations suivantes :
(a) ajuster la cavité de moule droit ajustable (20) ;
(b) ajuster la cavité de moule gauche ajustable (24);
(c) injecter de la matière plastique dans la cavité de moule droit ajustable (20) pour former un premier composant d'un premier produit à composants multiples (10);
(d) injecter de la matière plastique dans la cavité de moule gauche ajustable (24) pour former un second composant du second produit à plusieurs composants (12), lequel se combine à un premier composant du second produit à plusieurs composants (12) qui a été injecté dans la cavité de moule gauche ajustable (24) au cours de l'opération (i) du cycle précédent, pour mouler ainsi ledit second produit à plusieurs composants (12) ;
(e) éjecter le second produit à plusieurs composants (12) ;
(f) ajuster la cavité de moule gauche ajustable (24);
(g) ajuster la cavité de moule droit ajustable (20) ;
(h) injecter de la matière plastique dans la cavité de moule droit ajustable (20) pour former un second composant dudit produit à plusieurs composants (10), lequel se combine au premier composant du premier produit à plusieurs composants (10) qui a été injecté dans la cavité de moule droit ajustable (20) à l'opération (c), pour mouler ainsi ledit premier produit à plusieurs composants (10) ;
(i) injecter de la matière plastique dans la cavité de moule gauche ajustable (24) pour former un premier composant d'un second produit à plusieurs composants (12); et
(j) éjecter le premier produit à plusieurs composants (10) ;
caractérisé par les opérations suivantes :
(k) former la cavité de moule droit ajustable (20) entre un bloc droit de moulage (58) et un bloc central de moulage (60), en déplaçant un premier moyen de barrage mobile (22) ; et
(l) former la cavité de moule gauche ajustable (24) entre un bloc gauche de moulage (62) et le bloc central de moulage (60) en déplaçant un second moyen de barrage mobile (26).

2. Procédé selon la revendication 1, caractérisé par le fait que l'opération (j) est effectuée après l'opération (h) et avant l'opération (d) du cycle suivant.

3. Procédé selon l'une quelconque des revendications 1 ou 2, caractérisé par le fait que l'opération (e) est effectuée après l'opération (d) et avant l'opération (h).

4. Procédé selon la revendication 1 ou 2, dans lequel l'appareil de moulage par injection comprend une première unité d'injection (16) et une seconde unité d'injection (18), caractérisé en ce que
l'opération (c) comprend l'opération suivante :
(m) injecter une première partie d'une première matière plastique par la première unité d'injection (16) dans la cavité de moule droit ajustable (20) ;
l'opération (d) comprend l'opération suivante :
(n) injecter une première partie d'une seconde matière plastique par la seconde unité d'injection (18) dans la cavité de moule gauche ajustable (24) ;
l'opération (h) comprend l'opération suivante :
(o) injecter une seconde partie de la seconde matière plastique par la seconde unité d'injection (18) dans la cavité de moule droit ajustable (20) ; et
l'opération (i) comprend l'opération suivante :
(p) injecter une seconde partie de la première matière plastique par la première unité d'injection (16) dans la cavité de moule gauche ajustable (24).

5. Procédé selon l'une des revendications 1, 2 ou 4, caractérisé en ce que
l'opération (a) comprend l'opération suivante :
(q) sortir le premier moyen de barrage (22) ;
l'opération (b) comprend l'opération suivante :
(r) rentrer le second moyen de barrage (26) ;
l'opération (f) comprend l'opération suivante :
(s) sortir le second moyen de barrage (26) ; et
l'opération (g) comprend l'opération suivante :
(t) rentrer le premier moyen de barrage (22).

6. Procédé selon l'une des revendications 1, 2, 4 ou 5, dans lequel l'appareil de moulage par injection comprend une unité commune de blocage (28) pour bloquer les blocs de moulage (58, 60, 62), le procédé étant caractérisé en ce qu'il comprend encore les opérations suivantes :
(u) fermer l'unité de blocage (28) pour appliquer ainsi une force de blocage simultanément à la cavité de moule droit ajustable (20) et à la cavité de moule gauche ajustable (24) ;
(v) ouvrir l'unité commune de blocage (28) pour ouvrir la cavité de moule gauche ajustable (24) et éjecter le second produit à plusieurs composants (12) selon l'opération (e), tout en maintenant la cavité de moule droit ajustable (20) fermée ;
(w) fermer l'unité de blocage (28) pour appliquer ainsi une force de blocage simultanément à la cavité de moule droit ajustable (20) et à la cavité de moule gauche ajustable (24) ; et
(x) ouvrir l'unité commune de blocage (28) pour ouvrir la cavité de moule droit ajustable (20) et éjecter le premier produit à plusieurs composants (10) selon l'opération (j), tout en maintenant fermée la cavité de moule gauche ajustable (24).

7. Procédé selon la revendication 6, dans lequel l'opération (a) et l'opération (b) se font dans la période qui suit le début de l'opération (x) du cycle de moulage précédent et avant la fin de l'opération (u), et dans lequel l'opération (f) et l'opération (g) sont effectuées dans la période qui suit le début de l'opération (v) et avant la fin de l'opération (w).

8. Procédé selon la revendication 6, dans lequel l'appareil de moulage par injection comprend un moyen de verrouillage droit (54) pour verrouiller le bloc droit de moulage (58) sur le bloc central de moulage (60), et un moyen de verrouillage gauche (56) pour verrouiller le bloc central de moulage (60) sur le bloc gauche de moulage (62), et
dans lequel le procédé, après l'opération (u), comprend l'opération suivante :
(y) verrouiller ensemble le bloc droit et le bloc central de moulage (58, 60) ;
dans lequel le procédé avant l'opération (v) comprend l'opération suivante :
(z) déverrouiller le bloc central et le bloc gauche de moulage (60, 62) ;
dans lequel le procédé après l'opération (w) comprend l'opération suivante :
(aa) verrouiller ensemble le bloc central et le bloc gauche de moulage (60, 62) ; et
dans lequel le procédé avant l'opération (x) comprend l'opération suivante :
(ab) déverrouiller le blocs droit et le bloc central de moulage (58, 60).

9. Procédé selon la revendication 1, 2, 4, 5 ou 6, dans lequel le premier produit à plusieurs composants (10) est essentiellement identique au second produit à plusieurs composants (12).

10. Procédé selon l'une des revendications 1, 2, 4, 5 ou 6, dans lequel l'opération (c) et l'opération (d) sont effectuées sensiblement en même temps, et dans lequel l'opération (h) et l'opération (i) sont effectuées sensiblement en même temps.

11. Procédé selon l'une des revendications 1, 2, 4, 5 ou 6, dans lequel l'opération (a) et l'opération (b) sont effectuées sensiblement en même temps, et dans lequel l'opération ((f) et l'opération (g) sont effectuées sensiblement en même temps.

12. Appareil de moulage par injection pour le moulage cyclique par injection d'un premier produit en matière plastique à plusieurs composants (10) et d'un second produit en matière plastique à plusieurs composants (12), ledit appareil définissant une cavité de moule droit ajustable (20) et une cavité de moule gauche ajustable (24), et ledit appareil comprenant :
des moyens (22, 64) pour ajuster la cavité de moule droit ajustable (20) ;
des moyens (26, 64) pour ajuster la cavité de moule gauche ajustable (24) ;
une première unité d'injection (16) pour injecter une matière plastique dans la cavité de moule droit ajustable (20), afin de former un premier composant du premier produit à plusieurs composants (10), et pour injecter une matière plastique dans la cavité de moule gauche ajustable (24), pour former un premier composant d'un second produit à plusieurs composants (12) ;
une seconde unité d'injection (18) pour injecter une matière plastique dans la cavité de moule droit ajustable (20) une fois ajustée la cavité du moule droit ajustable après la formation du premier composant du premier produit à plusieurs composants (10), afin de former un deuxième composant dudit premier produit à plusieurs composants (10), lequel se combine au premier composant du premier produit à plusieurs composants (10) afin de mouler ainsi ledit premier produit à plusieurs composants (10), et pour injecter de la matière plastique dans la cavité de moule gauche ajustable (24) une fois ajustée la cavité de moule gauche ajustable après la formation du premier composant du deuxième produit à plusieurs composants (12) afin de former un deuxième composant du deuxième produit à plusieurs composants (12), lequel se combine avec le premier composant du deuxième produit à plusieurs composants (12), afin de mouler ainsi ledit deuxième produit à plusieurs composants (12) ; et
caractérisé par un bloc droit de moulage (58), un bloc central de moulage (60) et un premier moyen de barrage mobile (22) pour former la cavité de moule droit ajustable (20) entre le bloc droit de moulage (58) et le bloc central de moulage (60), et par un bloc gauche de moulage (62) et un second moyen de barrage mobile (26) pour former la cavité de moule gauche ajustable (24) entre le bloc gauche de moulage (62) et le bloc central de moulage (60).

13. Appareil de moulage par injection selon la revendication 12, caractérisé par des moyens pour solliciter l'éjection du premier produit à plusieurs composants (10) après ladite injection d'une matière plastique dans la cavité de moule gauche ajustable (24), afin de former le premier composant du second produit à plusieurs composants (12) et avant ladite injection de matière plastique dans la cavité de moule droit ajustable (20) au cours du cycle suivant.

14. Appareil de moulage par injection selon la revendication 12 ou 13, caractérisé par des moyens pour solliciter l'éjection du second produit à plusieurs composants (12) après ladite injection de matière plastique dans la cavité de moule droit ajustable (20), pour former le premier composant du premier produit à plusieurs composants (10) et avant ladite injection de matière plastique dans la cavité de moule gauche ajustable (24) au cours du cycle suivant.

15. Appareil de moulage par injection selon la revendication 12 ou 13, dans lequel la première unité d'injection (16) est apte à injecter une première partie d'une première matière plastique pour former le premier composant du premier produit à plusieurs composants (10) et pour injecter une seconde partie de la première matière plastique pour former le premier composant du second produit à plusieurs composants (12) et la seconde unité d'injection (18) est apte à injecter une première partie d'une seconde matière plastique pour former le second composant du premier produit à plusieurs composants (10), et à injecter une seconde partie de la seconde matière plastique pour former le second composant du second produit à plusieurs composants (12).

16. Appareil de moulage par injection selon la revendication 12, 13 ou 15, caractérisé en ce qu'il comprend :
des moyens (64) pour sortir les premiers moyens de barrage (22) afin d'ajuster la cavité de moule droit ajustable (20) pour former le premier composant du premier produit à plusieurs composants (10) ;
des moyens (64) pour sortir les seconds moyens de barrage (26) afin d'ajuster la cavité de moule gauche ajustable (24) pour former le premier composant du second produit à plusieurs composants (12) ;
des moyens (64) pour rentrer les premiers moyens de barrage (22) afin d'ajuster la cavité de moule droit ajustable (20) pour former le second composant du premier produit à plusieurs composants (10) ; et
des moyens (64) pour rentrer les seconds moyens de barrage (26) afin d'ajuster la cavité de moule gauche ajustable (24) pour former le second composant du second produit à plusieurs composants (12) ;

17. Appareil de moulage par injection selon la revendication 12, 13, 15 ou 16, caractérisé en ce qu'il comprend en outre
une unité commune de blocage (28) pour bloquer les blocs de moulage (58, 60, 62) ;
des moyens pour fermer l'unité de blocage (28) afin d'appliquer ainsi une force de blocage simultanément à la cavité de moule droit ajustable (20) et à la cavité de moule gauche ajustable (24) ;
des moyens pour ouvrir l'unité commune de blocage (28) afin d'ouvrir la cavité de moule gauche ajustable (24) et d'éjecter le second produit à plusieurs composants (12) tout en maintenant fermée la cavité de moule droit ajustable (20) ; et
des moyens pour ouvrir l'unité commune de blocage (28) afin d'ouvrir la cavité de moule droit ajustable (20) et d'éjecter le premier produit à plusieurs composants (10) tout en maintenant fermée la cavité de moule gauche ajustable (24).

18. Appareil de moulage par injection selon la revendication 17, caractérisé par le fait que
les moyens (22, 64) pour ajuster la cavité de moule droit ajustable (20) sont adaptés à ajuster la cavité de moule droit ajustable (20) pour former le premier composant du premier produit à plusieurs composants (10) lorsque l'unité commune de blocage (28) a été ouverte pour ouvrir la cavité de moule droit ajustable (20) et éjecter le premier produit à plusieurs composants (10) et avant que l'unité commune de blocage (28) soit fermée, pour appliquer une force de blocage simultanément à la cavité de moule droit ajustable (20) et à la cavité de moule gauche ajustable (24) ;
les moyens (26, 64) pour ajuster la cavité de moule gauche ajustable (24) étant aptes à faire ajuster la cavité de moule gauche ajustable (24) pour former le second composant du second produit à plusieurs composants (12) après que l'unité commune de blocage (28) a été ouverte pour ouvrir la cavité de moule droit ajustable (20) et éjecter le premier produit à plusieurs composants (10), et avant que l'unité commune de blocage (28) soit fermée pour appliquer une force de blocage simultanément à la cavité de moule droit ajustable (20) et à la cavité de moule gauche ajustable (24) ; et
les moyens (26, 64) pour ajuster la cavité de moule droit ajustable (20) étant aptes à faire ajuster la cavité de moule droit ajustable (20) pour former le second composant du premier produit à plusieurs composants (10) après que l'unité commune de blocage (28) a été ouverte pour ouvrir la cavité de moule gauche ajustable (24) et éjecter le second produit à plusieurs composants (12), et avant que l'unité commune de blocage (28) soit fermée pour appliquer une force de blocage simultanément à la cavité de moule droit ajustable (20) et à la cavité de moule gauche ajustable (24) ; et
les moyens (26, 64) pour ajuster la cavité de moule gauche ajustable (24) étant aptes à faire ajuster la cavité de moule gauche ajustable (24) pour former le premier composant du second produit à plusieurs composants (12) après que l'unité commune de blocage (28) a été ouverte pour ouvrir la cavité de moule gauche ajustable (24) et éjecter le second produit à plusieurs composants (12), et avant que l'unité commune de blocage (28) soit fermée pour appliquer une force de blocage simultanément à la cavité de moule droit ajustable (20) et à la cavité de moule gauche ajustable (24).

19. Appareil de moulage par injection selon la revendication 17, caractérisé en outre en ce qu'il comprend
des moyens de verrouillage droit (54) pour verrouiller le bloc droit de moulage (58) sur le bloc central de moulage (60) ; et
des moyens de verrouillage gauche (56) pour verrouiller le bloc central de moulage (60) sur le bloc gauche de moulage (62) ; et
dans lequel l'appareil est apte à solliciter les moyens de verrouillage droit (54) pour verrouiller ensemble le bloc droit et le bloc central de moulage (58, 60) l'un par rapport à l'autre, et à solliciter les moyens de verrouillage gauche (56) pour verrouiller les blocs gauche et central de moulage (52, 60) après que l'unité commune de blocage (28) a été fermée pour appliquer une force de blocage simultanément à la cavité de moule droit ajustable (20) et à la cavité de moule gauche ajustable (24) ;
dans lequel l'appareil est apte à solliciter les moyens de verrouillage droit (54) pour déverrouiller le bloc droit et le bloc central de moulage (58, 60) avant que l'unité commune de blocage (28) soit ouverte pour ouvrir la cavité de moule droit ajustable (20) ; et
dans lequel l'appareil est apte à solliciter les moyens de verrouillage gauche (56) pour déverrouiller le bloc gauche et le bloc central de moulage (62, 60) avant que l'unité commune de blocage (28) soit ouverte pour ouvrir la cavité de moule gauche ajustable (24).

20. Appareil de moulage par injection selon la revendication 12, 13, 15, 16 ou 17, dans lequel le premier produit à plusieurs composants (10) est essentiellement identique au second produit à plusieurs composants (12).

21. Appareil de moulage par injection selon la revendication 12, 13, 15, 16 ou 17, caractérisé en ce que l'appareil est apte à solliciter la première unité d'injection (16) à injecter de la matière plastique dans la cavité de moule droit ajustable (20), pour former le premier composant du premier produit à plusieurs composants (10), sensiblement en même temps que la seconde unité d'injection (18) injecte de la matière plastique dans la cavité de moule gauche ajustable (24) pour former le second composant du second produit à plusieurs composants (12), et pour solliciter la première unité d'injection (16) à injecter de la matière plastique dans la cavité de moule gauche ajustable (24) pour former le premier composant du second produit à plusieurs composants (12), sensiblement en même temps que la seconde unité d'injection (18) injecte de la matière plastique dans la cavité de moule droit ajustable (20), pour former le second composant du premier produit à plusieurs composants (10).

22. Appareil de moulage par injection selon la revendication 12, 13, 15, 16 ou 17, caractérisé en ce que l'appareil est apte à solliciter les moyens (22, 64) pour ajuster la cavité de moule droit ajustable (20) afin d'ajuster la cavité de moule droit ajustable (20) pour former le premier composant du premier produit à plusieurs composants (10), sensiblement en même temps que les moyens (26, 64) pour ajuster la cavité de moule gauche ajustable (24) ajustent la cavité de moule gauche ajustable (24) pour former le second composant du second produit à plusieurs composants (12), et pour solliciter les moyens (22, 64) à ajuster la cavité de moule droit ajustable (20) pour ajuster la cavité de moule droit ajustable (20) et former le second composant du premier produit à plusieurs composants (10), sensiblement en même temps que les moyens (26, 64) pour ajuster la cavité de moule gauche ajustable (24) ajustent la cavité de moule gauche ajustable (24) pour former le premier composant du second produit à plusieurs composants (12).
